# FASCICULE DE BREVET EUROPEEN

(11) **EP 1 402 691 B1**
(45) Date de publication et mention de la délivrance du brevet: **19.07.2006**
(21) Numéro de dépôt: 02740807.9
(22) Date de dépôt: 24.05.2002
(51) Int. Cl.: H04L 12/58

(54) **PROCEDE ET DISPOSITIF D'ACHEMINEMENT DE COURRIER AVEC CONVERSION D'UNE FORME ELECTRONIQUE VERS UNE FORME PHYSIQUE**
MAIL-WEITERLEITUNGSVERFAHREN UND EINRICHTUNG MIT UMWANDLUNG VON ELEKTRONISCH ZU PAPIER
MAIL FORWARDING METHOD AND DEVICE WITH ELECTRONIC-TO-PAPER CONVERSION

(30) Priorité: 25.05.2001 FR 0106870
(43) Date de publication de la demande: 31.03.2004
(73) Titulaire: Robin, Bruno Marie, 92350 Le Plessis-Robinson (FR)
(72) Inventeur: Robin, Bruno Marie, 92350 Le Plessis-Robinson (FR)
(74) Mandataire: Bloch, Gérard
(86) Numéro de dépôt international: PCT/FR2002/001757
(87) Numéro de publication internationale: WO 2002/096045

(56) Documents cités:
- EP-A- 0 483 421
- EP-A- 0 565 850
- WO-A-01/10089
- CA-A- 2 276 641
- GRIESMER S J ET AL: "EVOLUTION OF MESSAGING STANDARDS" AT & T TECHNICAL JOURNAL, AMERICAN TELEPHONE AND TELEGRAPH CO. NEW YORK, US, vol. 73, no. 3, 1 mai 1994 (1994-05-01), pages 21-45, XP000452252 ISSN: 8756-2324
- "WORKSTATION COMMUNICATIONS SYSTEM" IBM TECHNICAL DISCLOSURE BULLETIN, IBM CORP. NEW YORK, US, vol. 37, no. 9, 1 septembre 1994 (1994-09-01), pages 101-104, XP000473347 ISSN: 0018-8689

## Description

L'invention concerne l'acheminement de courrier, et plus particulièrement un procédé et un système permettant d'émettre un courrier sous forme électronique et de le faire parvenir à son destinataire sous forme de pli physique (lettre ou colis) et éventuellement, à l'inverse, permettant d'émettre un courrier sous forme de pli physique et de le faire parvenir à son destinataire sous forme de courrier électronique.

La communication de messages ou de documents et de fichiers graphiques ou sonores sous forme électronique s'est très rapidement banalisée depuis la fin des années 90 grâce à Internet, donnant lieu à une communauté d'Internautes (utilisateurs d'Internet). De nombreux fournisseurs d'accès sur Internet offrent des boîtes aux lettres électroniques personnalisées à peu de frais, voire gratuitement, rendant ce mode de communication accessible à tout possesseur d'ordinateur personnel (PC) équipé d'un modem. Par ailleurs, il se commercialise des boîtiers intégrés spécifiquement adaptés pour communiquer sur Internet via l'écran d'un téléviseur ou un écran intégré.

Néanmoins, il est clair qu'aujourd'hui les non-Internautes représentent encore une partie majoritaire de la population.

Il est tout autant certain qu'au moins jusqu'à l'expiration de la présente décennie, si le nombre des non-Internautes ira en se réduisant, il persistera néanmoins à représenter une partie non négligeable de la population.

A l'inverse, l'utilisation de plus en plus naturelle et sophistiquée du courrier électronique par une autre partie de la population qu'est celle des Internautes habituels, population en expansion de plus en plus accélérée, aura pour corollaire que ces derniers envisageront de plus en plus difficilement de communiquer hors du domaine du web et plus particulièrement de sa messagerie.

Il en résulte ainsi une fracture évolutive entre ces deux parties de population.

Bien plus, l'existence même du réseau Internet peut apporter un moyen de communication nouveau au bénéfice du non-Internaute sans pour autant qu'il ne passe dans le camp des Internautes.

En d'autres termes, il existe un besoin d'organiser la possibilité pour l'Internaute d'émettre l'information à destination du non-Internaute par voie électronique et pour ce dernier de recevoir la même information selon ses habitudes, c'est-à-dire par voie non électronique (par exemple postale).

Dans le prolongement, il existe un besoin de permettre à l'utilisateur de téléphones portables d'envoyer des messages de type SMS (de l'anglais "short message system"), voire des courriers électroniques, à des non-détenteurs de téléphones portables qui les recevront, ici aussi par voie postale (normale, exprès, télégraphe ...).

L'utilisation exponentielle du réseau Internet, et plus particulièrement de la messagerie électronique, génère par ailleurs d'une part des impératifs d'authentification et de certification de l'information et de ses auteurs et, d'autre part, une nécessité de rationalisation de l'archivage sécurisé des données, dont une partie importante est ou deviendra constitutive de "documents officiels" ou reconnus comme tels.

Cela a pour corollaire qu'on ne pourra pas longtemps se contenter d'archivage "approximatif " sur des systèmes individuels ou limités à l'entreprise, systèmes par définition destinés à évoluer, voire à être remplacés, avec toutes les conséquences potentielles quant à la perte ou l'altération de l'information contenue ou tout au moins quant à la garantie de l'authenticité et de l'intégrité de la recherche des données et documents archivés.

De ce qui précède, on comprend l'utilité de permettre la communication, voire de générer une communication jusque là inexistante, entre la population des Internautes et celle des non-Internautes, et ce jusqu'à la démocratisation généralisée de l'utilisation du réseau Internet.

Cette communication peut permettre en outre de s'adresser par courrier électronique à un Internaute dont on ne connaît pas l'adresse électronique, mais simplement un identifiant quelconque, par exemple son numéro de téléphone.

Au-delà ou à côté de cette ambition, cette communication peut permettre de favoriser l'émission au travers du réseau Internet de documents électroniques remis sous forme physique, ou pouvant être remis sous cette forme, et d'organiser la cohérence dans la circulation entre des documents électroniques et des documents physiques.

Il s'agit par ailleurs de rationaliser, sécuriser, authentifier et archiver l'information dans le respect des critères réglementaires et normatifs d'ores et déjà mis en place ou à naître.

Dans ce cadre général, on connaît déjà un système d'acheminement de courrier dans un environnement Internet proposé par La Poste sous la dénomination "Courrier électroniqueev@", ou "mailev@". Ce service est essentiellement un produit permettant à des entreprises d'automatiser l'envoi actuel et existant de leur courrier. En cela, il est intéressant et bénéfique, mais il est limité à la sphère de l'utilisation professionnelle et n'est pas optimisé pour les particuliers et autres utilisateurs occasionnels. On remarque à ce propos qu'il nécessite d'entrer dans un site Internet spécifique avant de permettre l'envoi d'un courrier sous forme électronique, et que le droit d'accès au service est sous condition d'un abonnement préalable, avec une facturation propre au service.

L'invention n'a pas le même objectif puisqu'il vise un système simple à l'emploi, permettant l'envoi extrêmement facile, c'est-à-dire comme un simple courrier électronique, de messages par une personne disposant d'un terminal d'envoi de courrier électronique (Internaute) à une population non-Internaute qui recevra le message ainsi émis sous forme physique.

En effet, l'invention s'adresse à un double problème technique identifié qui est en lui-même nouveau : permettre à une personne (émetteur) d'envoyer un courrier sous forme immatérielle (électronique) à une personne destinatrice (destinataire) avec deux contraintes imposées :
a) d'une part sans que le destinataire ait à accéder à un outil de messagerie électronique, et
b) d'autre part sans que l'adresse physique du destinataire n'ait à être évoquée lors de l'envoi, soit parce que l'émetteur ne l'a pas à disposition lors de l'envoi, soit pour des raisons de commodité.

Typiquement, l'adresse physique en question est l'adresse postale ou, dans le cas d'un destinataire logé auprès d'un organisme, l'adresse de distribution de courrier au sein de cet organisme (service, rayon, No. de chambre, casier, pièce dans un bâtiment, etc.).

Ce double problème est présent notamment avec des destinataires qui sont isolés du monde des communications électroniques pour diverses raisons : situation géographique, empêchement matériel, manque de formation aux outils de communication adéquats, inhibition ou même une attitude réfractaire envers ces outils.

Par ailleurs, l'émetteur du message ne peut être toujours censé disposer à tout moment de l'adresse physique du destinataire, celle-ci étant relativement longue (notamment lorsqu'il s'agit d'une adresse postale) et d'aucune utilité dans un environnement de communication immatériel. Dans un tel environnement, on utilise en effet des identifiants (adresse e-mail, numéro de téléphone, matricule, ...) qui n'expriment pas une adresse géographique pour joindre un destinataire. Les outils de stockage des coordonnées de destinataires possibles par contacts électroniques sont ainsi parfois soit pas prévus pour stocker des adresses physiques, soit pas utilisés pour inscrire une adresse physique.

Aucun état de la technique connu ne prévoit ou suggère ce double problème (contraintes a) et b) supra). On note à ce propos l'existence des documents suivants :
Le document brevet CA 2 276 641 divulgue la conversion d'un courrier électronique en courrier postal.
   - l'article Griesner S J et al : "Evolution of messaging standards", AT&T Technical Journal, New York, US, vol.73, no.3, 1 mai 1994, pages 21-45, qui concerne essentiellement les problèmes de compatibilité entre deux normes de communication : ITU X.400 et le protocole Internet.

La transmission de messages par ces deux normes se situe essentiellement au niveau de la forme immatérielle. Elle est assurée par :
- un agent utilisateur, qui assure une liaison pour messages interpersonnels, de données électroniques, et la voix, ou
- une unité d'accès, qui permet de relier le protocole X.400 à des services extérieurs.

Le format de message de la norme X.400 précise une enveloppe de message, comprenant des informations génériques nécessaires au routage du message, mais basées sur l'adresse postale, dans le cas d'un routage postal. Cette adresse est identifiée avec des attributs spécifiques, chacun correspondant à un champ possible d'une adresse postale (code postal, adresse de rue, etc.) à fournir par l'émetteur.

Il apparaît donc que ce cas de figure nécessite que l'émetteur du message ait connaissance de l'adresse physique du destinataire.

L'article « Workstation Communication System » IBM Technical Disclosure Bulletin, vol. 37, No. 9, 1 septembre 1994, pages 101-104, qui concerne un système intégré permettant d'unir les fonctionnalités du téléphone, du fax, et du télex avec le courrier électronique. Aucune indication n'est donnée en ce que concerne la manière précise d'extraire une adresse postale à partir de l'information numérisée dans le cas d'une éventuelle transmission par courrier postal.

Ainsi, cette antériorité suppose la connaissance de l'adresse physique au niveau de l'émetteur, et ne peut donc répondre à la contrainte b) supra du double problème pour lequel l'invention offre une solution optimale.
- Le document brevet EP-A-0 565 850, qui concerne un système de messagerie intégrée, réunissant différents types de messages (voix, texte, image, e-mail) avec possibilités de conversion. Ce document n'évoque pas de possibilité de conversion d'un courrier vers une forme physique dans un but de continuer l'acheminement du courrier. En effet, la gestion s'arrête à une corbeille d'entrée de messages sous forme électronique. Ainsi, le système selon ce document est prévu pour des destinataires aptes à prendre leur courrier auprès d'un serveur électronique, et ne résout donc aucune des deux composantes du double problème précité ;
- Le document brevet EP-A-0 483 421, qui concerne une mise en oeuvre de système informatique en réseau avec une gestion de portails (« gateways »). Comme pour le document précédent, ce système ne considère pas un acheminement de courrier en dehors du réseau informatique, alors que l'invention a pour mission de relier des personnes (destinataires de messages) se situant en dehors des voies de connexion du courrier électronique ; et
- le document brevet WO-A-01 10089, qui prévoit d'intégrer le numéro de téléphone du destinataire dans un message électronique pour assurer le routage. Toutefois, ce numéro sert à créer à la volée une adresse e-mail pour le destinataire afin que celui-ci puisse y avoir accès. Le message reste donc sous sa forme électronique. Il n'y a pas de recherche d'adresse physique du destinataire, ni de conversion du message en forme physique avant de le remettre au destinataire.

Aussi, il n'est pas prévu de convertir le message vers une forme physique et de l'acheminer sous sa forme physique vers le destinataire à une adresse extraite du numéro. Autrement dit, il est nécessaire au destinataire de prévoir un accès au site créé de manière ad hoc par l'émetteur. A ce titre, il est d'ailleurs prévu par ce document un processus pour informer le destinataire sur son téléphone de la mise à disposition du message à l'adresse utilisée.

On connaît également par les documents brevets:
- WO-A-9723082, un système de conversion de document envoyé en télécopie en courrier électronique et vice versa. Ce système est basé sur un serveur intégré au réseau téléphonique et comprend des moyens d'émission de facture vers l'envoyeur ou le destinataire ;
- WO-A-0048377, un système de transmission par courrier électronique, sous forme de fichiers audio, de messages vocaux enregistrés par téléphone ;
- WO-A-0041064, un système de livraison de messages envoyés sous forme de courrier électronique vers une imprimante locale à proximité du destinataire, avec éventuelle adaptation du fichier au format de l'imprimante ; et
- EP-A-0917075, un système de tri automatique de messages à partir d'un flot continu, entre ceux destinés à être livrés sous forme physique, et ceux destinés à une transmission sous forme électronique.

L'invention résout le double problème grâce à une combinaison judicieuse de moyens, qui permet à l'expéditeur de s'assurer que son courrier, sous forme immatérielle (électronique), typiquement un e-mail, pourra être acheminé à bon port dans un tel cas de figure. Il peut ainsi communiquer de manière transparente avec un destinataire sans avoir à prendre des dispositions particulières si ce dernier n'a pas accès à une messagerie électronique, simplement en utilisant son identifiant (par exemple son numéro de téléphone) pour l'envoi du courrier électronique.

Plus particulièrement, l'invention propose, selon un premier aspect, un procédé d'acheminement de courrier émis sous forme immatérielle (courrier électronique) depuis un terminal, pour remise à un destinataire à l'adresse physique de ce dernier et sur un support matériel,
caractérisé en ce qu'il comprend les étapes :
au niveau du terminal de l'émetteur, de :
   - prévoir un champ associé au courrier à émettre, et dans lequel l'émetteur inscrit une information identifiant le destinataire (autrement dit une coordonnée du destinataire), cette information étant autre que l'adresse physique du destinataire, et
   - transmettre le courrier sous forme immatérielle à un ensemble de gestion, et
au niveau de l'ensemble de gestion, de:
   - prévoir une base de données établissant un lien de correspondance entre l'information identifiant le destinataire et l'adresse physique du destinataire pour un ensemble de destinataires,
   - réceptionner le courrier et lire l'information identifiant le destinataire inscrite dans ce champ,
   - déterminer par référence à cette base de données l'adresse physique du destinataire qui correspond à l'information identifiant le destinataire lue,
   - transcrire le contenu du courrier reçu sous forme immatérielle sur un support matériel, et
   - expédier le support matériel à l'adresse physique déterminée.

Bien entendu, l'ordre d'exécution des étapes de déterminer l'adresse physique et de transcrire le contenu du courrier est arbitraire.

A titre d'exemple, l'étape de transcrire peut comprendre l'impression sur papier (ou autre support matériel) du contenu du courrier reçu, l'enregistrement du contenu du courrier sur un support matériel d'enregistrement (cédérom, disquette, ou autre dispositif de stockage de données), la transcription sur un support audiovisuel (tel qu'une cassette), etc.

Avantageusement, le courrier est émis vers une adresse électronique de l'ensemble de gestion, avec l'information identifiant le destinataire intégrée à l'adresse électronique. Cette adresse peut comporter un nom de domaine sur Internet, l'information identifiant le destinataire étant intégrée au nom de domaine pour former une adresse Internet personnalisée d'identification du destinataire.

De préférence, l'adresse personnalisée d'identification du destinataire se présente selon le format comprenant la séquence :
"information identifiant le destinataire@Nom de domaine",
Avantageusement, l'information identifiant le destinataire comprend un numéro de téléphone du destinataire.

Dans le mode de réalisation envisagé, l'information identifiant le destinataire comprend en outre le nom du destinataire.

L'invention permet de réaliser l'émission du courrier directement à partir d'une messagerie électronique classique d'envoi de courrier électronique, sans avoir à entrer dans un site spécifique.

Le procédé peut opérer dans le cadre d'un service sans abonnement, le procédé comprenant alors en outre les étapes de :
- établir un coût à payer pour l'acheminement du courrier,
- transmettre des données correspondant à au moins une partie dudit coût à un prestataire d'autres services auquel est lié l'émetteur ou le destinataire, et
- faire intégrer lesdites données dans la facturation émise par ledit prestataire.

Le prestataire de services peut être un fournisseur d'accès aux moyens de communication du courrier sous forme électronique depuis l'émetteur du courrier ou vers le destinataire du courrier, notamment un fournisseur d'accès sur Internet ou un opérateur télécom.

Il est possible de prévoir en outre une adresse téléphonique avec accueil sur un service d'enregistrement de courrier sous forme sonore, accessible à un émetteur de courrier sous forme électronique, présentant en outre un champ temporel d'enregistrement de l'information identifiant le destinataire sous forme sonore, lequel constitue ledit champ associé, la transcription vers la forme physique au niveau de l'ensemble de gestion s'effectuant par transfert du message sonore sur un support physique portatif livré au destinataire.

Dans le mode de réalisation envisagé, on peut permettre à un émetteur de courrier sous forme électronique de spécifier un service optionnel relatif à l'acheminement de ce courrier, dont au moins l'un parmi:
- un acheminement avec accusé de réception (AEC),
- un acheminement avec livraison en exprès du courrier transformé en sa forme physique (EXP),
- un acheminement sans frais moyennant l'introduction de message(s) publicitaire(s) dans ledit courrier (PUB).

L'adresse électronique d'un ensemble de gestion qui réceptionne un courrier sous forme électronique se présentant sous forme de nom de domaine sur Internet, on peut alors avantageusement permettre la sélection du service optionnel par intégration d'un code d'identification dudit service (REC, EXP, PUB) à ladite adresse électronique.

La conversion d'un courrier de sa forme immatérielle vers sa forme physique est de préférence effectuée à un ensemble de gestion, parmi un réseau de tels ensembles, affecté au destinataire selon des critères préétablis, par exemple en fonction de la proximité, cet ensemble de gestion effectuant au moins l'une des étapes parmi :
- l'impression du document sur support physique dans le cas d'un courrier électronique comportant des données destinées à être imprimées (texte, images); et
- l'enregistrement des données électroniques sur un support optique ou magnétique dans le cas de données sonores, d'images ou autre, ou lorsque l'utilisation d'un support est demandée lors de l'émission du courrier.

Le procédé peut prévoir en outre l'acheminement de courrier émis sous forme matérielle (physique), la conversion de ce courrier vers une forme immatérielle (électronique) et sa livraison sous cette forme immatérielle, le procédé comprenant au moins l'une des étapes parmi:
- l'analyse optique pour numérisation en vue de l'intégration des données de numérisation dans le courrier sous forme électronique; et
- l'extraction de données contenues dans un support d'enregistrement en vue de l'intégration de celles-ci dans le courrier sous forme électronique.

Il peut aussi comprendre, préalablement à l'acheminement du courrier au destinataire, les étapes de:
- établir un prix de prestation et de transmission,
- transmettre un message électronique indiquant ledit prix à l'expéditeur ou au destinataire du courrier sous forme électronique,
- attendre en réponse un message d'accord dudit expéditeur ou destinataire,
- faire aboutir l'acheminement du courrier vers ledit destinataire en fonction du message d'accord.

Dans le mode de réalisation envisagé, le procédé permet un transit sous forme cryptée des données constitutives d'un courrier sous forme électronique sur au moins une partie de son acheminement.

On peut également prévoir une étape de lier une signature électronique au courrier dans sa forme électronique.

Une authentification de ladite signature électronique peu alors être établie conformément à une convention établie, cette convention pouvant être gérée au niveau d'un ensemble qui gère en outre ledit procédé d'acheminement.

Le procédé permet aussi d'archiver des courriers sous forme électronique, avant ou après transformation, éventuellement avec une signature électronique.

Dans le cas d'une émission de courrier sous forme électronique, le procédé peut chercher une éventuelle adresse électronique du destinataire et, dans le cas d'une coordonnée d'une telle adresse, d'acheminer le courrier sous forme électronique vers ladite adresse sans effectuer ladite transformation.

Selon un deuxième aspect, l'invention prévoit un système d'acheminement de courrier émis sous forme immatérielle depuis un terminal, pour remise à un destinataire à l'adresse physique de ce dernier et sur un support matériel,
caractérisé en ce qu'il comprend :
au niveau du terminal de l'émetteur:
   - des moyens de présentation d'un champ associé au courrier à émettre et de gestion d'une information identifiant le destinataire contenue dans ce champ, cette information étant autre que l'adresse physique du destinataire, et
   - des moyens de transmission du courrier sous forme immatérielle à un ensemble de gestion, et
au niveau de l'ensemble de gestion :
   - une base de données établissant un lien de correspondance entre l'information identifiant le destinataire et adresse physique pour un ensemble de destinataires,
   - des moyens pour réceptionner le courrier et lire l'information identifiant le destinataire inscrite dans ce champ,
   - des moyens pour déterminer par référence à ladite base de données l'adresse physique du destinataire qui correspond à l'information identifiant le destinataire lue,
   - des moyens pour transcrire le contenu du courrier reçu sous forme immatérielle sur un support matériel, et
   - des moyens assurant l'expédition du support matériel à ladite adresse physique déterminée.

Les caractéristiques optionnelles de l'invention présentées plus haut dans le cadre du procédé s'applique mutatis mutandis à ce système.

Selon un troisième aspect, l'invention prévoit un terminal du système selon le deuxième aspect,
caractérisé en ce qu'il comprend :
- des moyens de présentation d'un champ associé au courrier à émettre et de gestion d'une information identifiant le destinataire contenue dans ce champ, cette information étant autre que l'adresse physique du destinataire, et
- des moyens de transmission du courrier sous forme immatérielle à un ensemble de gestion.

Selon un quatrième aspect, l'invention prévoit un ensemble de gestion du système selon le deuxième aspect, caractérisé en ce qu'il comprend :
- une base de données établissant un lien de correspondance entre l'information identifiant le destinataire et adresse physique pour un ensemble de destinataires,
- des moyens pour réceptionner le courrier et lire l'information identifiant le destinataire inscrite dans le champ,
- des moyens pour déterminer par référence à la base de données l'adresse physique du destinataire qui correspond à l'information identifiant le destinataire lue,
- des moyens pour transcrire le contenu du courrier reçu sous forme immatérielle sur un support matériel, et
- des moyens assurant l'expédition du support matériel à ladite adresse physique déterminée.

Selon un cinquième aspect, l'invention prévoit un support d'enregistrement exploitable par un ordinateur, le support comportant un programme informatique permettant l'exécution du procédé selon le premier aspect au niveau du terminal et/ou au niveau d'un ensemble de gestion.

L'invention permet ainsi d'offrir en outre une très large gamme de fonctionnalités non prévues ou non visées par les services existants.

L'invention offre en outre, d'un point de vue pédagogique, l'opportunité de préparer le non-Internaute à sa future migration vers la population des Internautes et c'est sans doute tout naturellement qu'il utilisera un jour ou l'autre lui-même Internet en commençant à gérer la messagerie unifiée.Dans un mode de réalisation préféré, l'invention permet aussi de mettre en oeuvre un système de sécurisation des signatures dans les messages transmis. Cette sécurisation peut se faire par le biais d'un organisme certificateur pour ce qui concerne la signature électronique, reconnue comme constituant juridiquement un moyen de preuve.

L'invention peut aussi intégrer les critères normatifs qui sont en cours de mise en place et de publication en ce qui concerne l'archivage des données.

Dans ce cadre, l'invention peut se mettre en conformité avec ces normes, et ainsi de garantir à l'auteur des informations une restitution rationnelle, au moment de son choix et avec la valeur probante adéquate, dans le cadre d'un service prenant en compte en outre l'authentification liée à la signature électronique, tant en ce qui concerne l'intégrité et le contenu des données authentifiées et/ou archivées que la certitude qu'ils émanent de l'auteur signataire.

Dans un mode de réalisation préféré, l'émission d'un courrier sous forme immatérielle s'effectue par la messagerie électronique habituelle de l'Internaute, dont l'utilisation ne nécessite aucune autre formalité de sa part que celle de rédiger ou insérer son message, de rechercher dans son annuaire électronique son correspondant, ou de taper son adresse courrier électronique, s'il la connaît, et de procéder à l'envoi de son message et inversement en cas de réception de message. Il en est strictement de même pour l'émetteur de messages type "SMS" précité dans les modes de réalisation qui prévoient cette voie d'accès.

La progression du nombre de courriers électroniques échangés est considérable et évoluera de plus en plus en ce sens.

On peut considérer à l'inverse qu'une très grande proportion des messages ainsi émis n'existerait pas si leur auteur avait dû recourir à la procédure "physique habituelle", c'est-à-dire se procurer une feuille de papier, un stylo, écrire son message, le relire, le corriger éventuellement, le donner à taper à une secrétaire, rechercher une enveloppe, rechercher l'adresse complète du destinataire, se procurer un timbre, se rendre à la Poste, etc.

Une communication rapide et intense se met donc en place entre les Internautes, c'est-à-dire entre les personnes susceptibles d'envoyer mais aussi de recevoir électroniquement des courriers, faisant ainsi la part maigre à la population non-Internaute.

De même, l'émetteur de SMS souhaite adresser un message écrit à son interlocuteur, ce qui ne correspond pas au même concept que l'envoi d'un message vocal sur un répondeur téléphonique, ni que l'appel téléphonique classique.

Ici, l'émetteur ne souhaite pas parler avec son interlocuteur.

Il veut à un moment précis de disponibilité de sa journée, lui faire parvenir un message, même bref, par écrit.

Or, il apparaît fort vraisemblable que de très nombreux Internautes seraient susceptibles d'envoyer tout autant fréquemment de tels messages et/ou informations à des non-Internautes, sous réserve qu'ils puissent le faire selon leur procédure électronique habituelle. Il en est de même pour l'émetteur de SMS.

Dans ce cadre, l'invention permet de mettre en place une solution qui maintienne l'Internaute dans un environnement strictement identique à celui dans lequel il se trouve lorsqu'il communique avec d'autres Internautes.

Pour cela, un mode de réalisation avantageux de l'invention prévoit d'une part de lui faciliter au mieux la recherche des coordonnées de son destinataire non-Internaute (i), et d'autre part de lui éviter d'avoir à générer une connexion vers un site Internet ou à devoir prendre en compte ou prendre en charge un système de facturation spécifique à l'utilisation de ce genre de communication (ii). En effet, ceci pourrait évincer par exemple tout Internaute à l'intérieur d'une entreprise, sauf à obtenir au préalable de la part de sa propre entreprise qu'elle accepte de s'abonner à un tel site et qu'ensuite sa communication soit individualisée et mesurée à travers un outil de facturation spécifique. Or, ce genre d'outils est contraignant puisqu'il nécessiterait l'envoi de coordonnées bancaires, la coordonnée précise de l'entreprise ou de l'abonné, etc.

Ainsi, un mode de réalisation possible de l'invention peut permettre de satisfaire aux deux impératifs ci-dessus, savoir : i) l'utilisation des numérotations téléphoniques ou autres identifiants des destinataires, et ii) la facturation sans formalisme préalable et ajustable.

Dans le cas où l'identifiant d'un destinataire est simplement son numéro de téléphone (personnel ou professionnel), on constate que dans la majorité des cas, si l'Internaute connaît ou dispose du numéro de téléphone de son destinataire, par définition en ce cas non-Internaute, il ignore le plus souvent son adresse postale géographique précise.

On considérera donc que permettre à un Internaute d'adresser un message par courrier électronique à un non-Internaute en recourant simplement mais nécessairement à son numéro de téléphone ou à un identifiant personnel couramment utilisé, constitue un procédé plus qu'acceptable.

A titre illustratif, tous les courriers électroniques adressés par des Internautes à des non-Internautes seront alors assortis d'un nom de domaine spécifique appartenant au prestataire de l'acheminement de courrier conformément à l'invention, par exemple MAILPUBLICA.COM.

Ils se présenteront ainsi qu'il suit : nom et/ou prénom du destinataire.numéro de téléphone du destinataire@MAILPUBLICA.COM
et par exemple :
Jean Martin.0144128972@Mailpublica.COM,
ce qui constitue une information identifiant le destinataire, i.e. une coordonnée du destinataire, qui n'est pas l'adresse physique (postale) de ce dernier, conformément à la présente invention.

L'envoi du message à l'adresse ainsi présentée ci-dessus sera directement routé vers le centre de gestion (MAILPUBLICA).

Le centre MAILPUBLICA qui est en fait, ainsi qu'on le verra ci-après, un service de gestion de l'acheminement de courrier, identifiera le destinataire par outil logiciel spécifique grâce à une interrogation automatisée de bases de données téléphoniques ou d'autre identifiants personnels. Cette interrogation est réalisée grâce à la correspondance entre l'information identifiant le destinataire, ou sa coordonnée, (par exemple le numéro de téléphone) et l'adresse de résidence de l'abonné détenteur de l'identifiant. Dans le cas où cette information identifiant le destinataire est le numéro de téléphone, les abonnés téléphoniques sur liste rouge devront quant à eux nécessairement être référencés par leur adresse postale complète.

Il pourra ainsi éditer une enveloppe rédigée de la façon suivante :
Monsieur ou Madame nom.prénom (données fournies par l'émetteur)
C/O nom et adresse de l'abonné téléphonique
   (coordonnées de l'abonné retrouvées automatiquement
   par mise en concordance avec le numéro de téléphone).

Et par exemple :
Monsieur Jean Martin
C/O Cabinet MARTIN
54, avenue Foch
75116 PARIS (abonné correspondant au numéro de téléphone 01 44 12 89 72)

En outre, tout Internaute pourra décider de s'abonner lui-même à un centre gestion de courrier en ouvrant ainsi une Messagerie Unifiée (MU) ou un serveur sur la base de son prénom.nom.numéro de téléphone, laquelle MU permettra ainsi de lier le numéro de téléphone concerné avec l'adresse courrier électronique de l'intéressé.

Ainsi, tout message qui lui sera adressé par un Internaute, ignorant par définition son adresse courrier électronique, par simple mention de son prénom.nom.numéro de téléphone sera directement routé vers son courrier électronique habituel.

La facturation sans formalisme préalable et ajustable, selon de mode le mode de réalisation préféré, permet d'éviter de mettre en place un contrat d'abonnement et/ou un nouveau service de facturation dédiée est d'avoir recours au prestataire qui d'ores et déjà facture l'utilisateur, en l'occurrence l'opérateur téléphonique ou le fournisseur d'accès. Cette facturation s'opère selon le même principe que le modèle du Minitel pour lequel la facturation des services quels qu'ils soient est en fait directement reportée sur les facturations téléphoniques.

On sait que sur Internet, le modèle économique du Minitel n'a à ce jour pas pu être repris pour des raisons d'ordre purement technique liées à la non-disponibilité de systèmes efficaces de comptage et de tri du contenu, le voyage et l'organisation du transport de l'information sur Minitel étant totalement différents du système Internet dans le cadre duquel le transport s'organise par paquets (IP) utilisant des routes totalement différentes pour une même information constituée d'un lot de paquets dont le regroupement logique n'intervient qu'à l'arrivée.

Toutefois, l'invention peut avantageusement opérer avec un système qui autorise une telle facturation sans formalisme préalable, à l'instar du système Minitel. Les aspects techniques de ce système de facturation peuvent par exemple être ceux décrits dans la demande FR-A-2 745 966.

Ce système permet, qui plus est, à l'Opérateur concerné d'intégrer dans son offre téléphonique une option extrêmement simple de facturation de l'émission du courrier électronique sous forme physique.

Ainsi, l'émetteur de courrier électronique à destination de non-Internautes se verrait-il facturé directement par son Opérateur ou Fournisseur d'Accès au volume envoyé et/ou au temps de connexion et/ou selon tous autres critères choisis.

Les contraintes élémentaires de simplification à l'extrême d'utilisation par l'Internaute ayant été ainsi résolues, il sera maintenant décrit les fonctionnalités principales du système d'acheminement de courriers conforme à l'invention.

Ce système, qui met en oeuvre des aspects optionnels.de l'invention, sera décrit en premier lieu dans le cadre de l'envoi de courriers électroniques qui sont transformés en entités matérielles (sous forme physique) et transmis sous cette forme matérielle à un destinataire.

L'invention et les avantages qui en découlent apparaîtront plus clairement à la lecture des modes de réalisation préférés, donnés purement à titre d'exemples non-limatatifs par référence aux dessins annexés dans lesquels :
- la figure 1 est un organigramme fonctionnel d'un système conforme à l'invention pour opérationnelle pour faire acheminer un courrier émis sous forme immatérielle et livré sous forme matérielle ;
- la figure 2 est un schéma d'une page d'écran d'une messagerie électronique typique, montrant l'insertion d'une adresse de destinataire de courrier sous forme physique conformément à l'invention ; et
- la figure 3 est un organigramme fonctionnel d'un système conforme à l'invention pour faire acheminer un courrier émis sous forme matérielle et livré sous forme immatérielle.

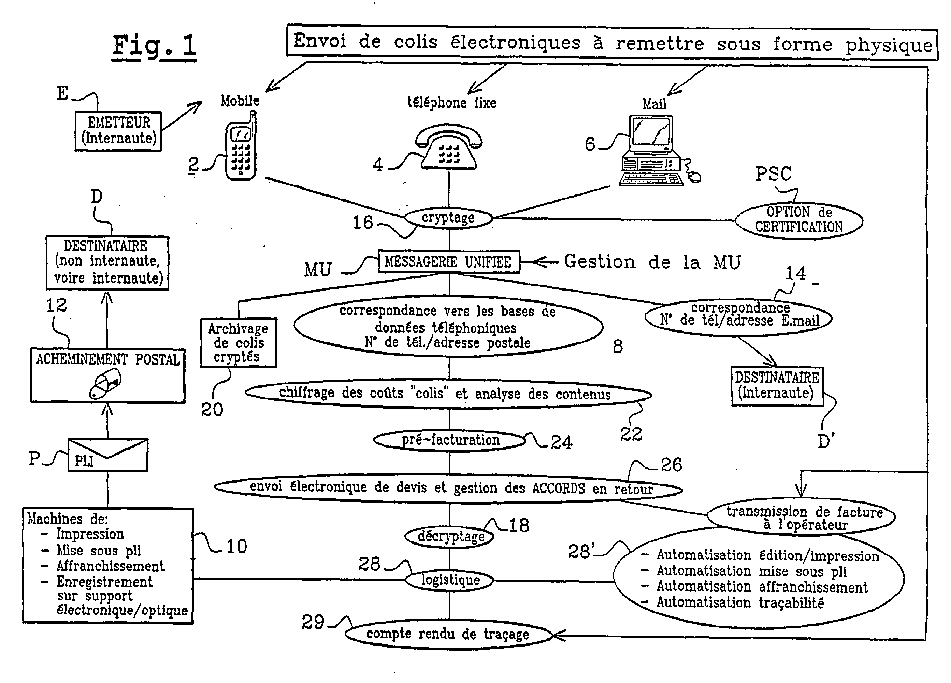

L'exemple de mise en oeuvre de l'invention représenté à la figure 1 explique le processus complet de l'émission d'un courrier sous forme immatérielle (électronique), sa conversion en forme matérielle (support physique) et la livraison sous cette forme matérielle à un destinataire identifié.

Le courrier en question peut être du texte, des images fixes ou dynamiques, ou du son (i.e. multimédia) et sera désigné dans ce qui suit par le terme générique de "colis", celui-ci pouvant être matériel ou immatériel. L'émetteur E du colis électronique dispose de plusieurs sources de communication pour effectuer son envoi, en l'occurrence :
- un terminal de téléphone mobile 2,
- un terminal de téléphone fixe 4, et
- un terminal relié sur le réseau Internet 6.

Les terminaux de téléphone, mobile ou fixe, permettent l'envoi de messages vocaux. Le terminal de téléphone mobile permet en outre l'envoi de messages alphanumériques en mode "messagerie" selon une norme prescrite, notamment le protocole SMS.

Le terminal Internet 6 permet l'envoi de courrier sous toutes formes, selon des procédés bien établis.

Les signaux issus de ces sources 2, 4 ou 6 sont adressés à un centre de gestion et de routage. Dans l'exemple, ce centre se présente sous forme de Messagerie Unifiée MU, qui regroupe les moyens techniques pour réaliser les différents services de gestion et/ou d'acheminement du courrier. On peut également envisager à cette fin un serveur adapté ou tout autre système informatisé de gestion.

Dans une mise en oeuvre typique, il sera prévu un nombre de telles Messageries Unifiés couvrant un territoire régional, national ou international. Ces Messageries Unifiées MU sont reliées les unes aux autres par un réseau de communication électronique, par exemple Internet ou un réseau Intranet spécifique. Le réseau de Messageries Unifiées opère automatiquement et gratuitement au bénéfice de tout destinataire D de colis, a priori n'ayant pas accès à une boîte de réception de courriers électroniques, i.e. un utilisateur dit "non-Internaute". Pour l'envoi de colis électroniques, une Messagerie Unifiée ne peut être alimentée que par voie électronique.

Au niveau du terminal de l'émetteur E d'un message sous forme électronique, aucun accès à un site Internet ou analogue n'est nécessaire pour réaliser l'envoi. Il lui suffit d'ouvrir sa messagerie ou boîte aux lettres électronique normalement utilisée pour l'envoi de courriers électroniques. Il peut s'agir, par exemple, du logiciel "Outlook Express" (Marque déposée de la société Microsoft), ou de tout autre interface logicielle de messagerie existante. Le message peut donc y être inscrit comme pour un courrier électronique "normal", avec bien entendu possibilité d'incorporer des pièces jointes sous forme de fichier texte, image, ou autre.

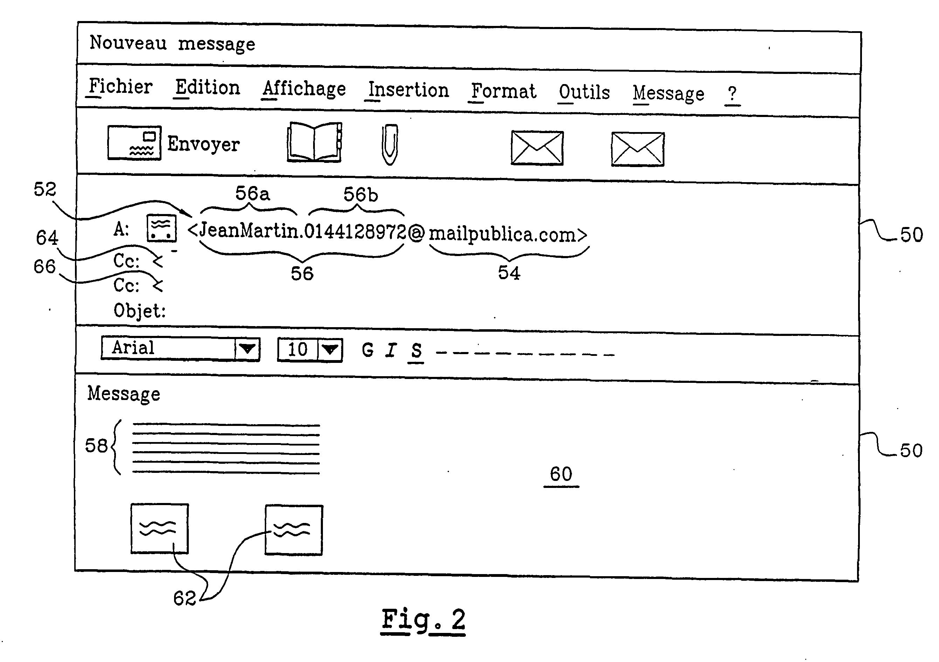

La figure 2 montre un exemple de page d'écran d'une boîte aux lettres classique 50 pour l'envoi de courriers électroniques.

Dans le champ (i.e. la case) 52 de la boîte aux lettres destinée à renseigner le nom du destinataire, l'émetteur E inscrira, pour reprendre l'exemple précité "Jean Martin.0144128972@Mailpublica.COM.

On remarque que cette adresse comprend une partie constante 54 pour tout envoi de courrier par le système, dans ce cas "@Mailpublica.com", et une partie variable 56, cette dernière étant composée du nom 56a suivi, après un point, par le numéro de téléphone 56b du destinataire. La partie "nom" 56a est optionnelle dans le cadre de ce mode de réalisation, car seul le numéro de téléphone est utilisé pour en extraire le lieu physique de destination. Ainsi, "l'identifiant" de destinataire est ici son numéro de téléphone.

Le colis est constitué par le message texte 58 inscrit dans la page blanche électronique 60 et/ou un ou plusieurs fichier(s) joint(s) 62. L'envoi d'un colis électronique de l'émetteur E vers le destinataire (voire plusieurs destinataires dans le cas d'une diffusion via le champ "Cc" 64 ou "Cci" 66.

En premier lieu, le colis est routé à une Messagerie Unifiée réceptrice, qui peut être une MU centrale ou une MU désignée selon l'emplacement de l'émetteur E.

Cette MU effectue alors un routage automatique du contenu du colis vers la Messagerie Unifiée alors ouverte au bénéfice du destinataire, sélectionnée en fonction de l'adresse géographique du destinataire de manière à raccourcir le trajet d'acheminement du colis sous sa forme physique.

A cette fin, la MU réceptrice comprend une unité 8 qui gère une base de données téléphoniques contenant notamment les numéros téléphoniques et adresses postales des abonnés du ou des opérateur(s) télécom(s). Sa couverture peut être nationale ou internationale. Cette base de données est indexée de manière à restituer automatiquement une adresse postale à partir d'une adresse téléphonique fournie en entrée, celle-ci étant extraite automatiquement du champ prévu à cet effet intégré à l'adresse électronique. Ainsi, dans le cadre de l'exemple précité où l'adresse fournie par l'émetteur E du message dans sa boîte aux lettre électronique est Jean Martin.0144128972@Mailpublica.COM, la base de données va extraire automatiquement la partie 56b, soit "0144128972" pour instruire le champ "numéro de téléphone" afin d'obtenir l'adresse physique correspondante. Ce type de base de données est généralement désigné par le terme "annuaire à l'envers". Le système peut faire appel, pour cette fonction, à des bases d'annuaire à l'envers existantes, notamment sur Internet.

On note que selon les modes de réalisation envisagés, l'identifiant qui parait dans la partie 56b précitée peut être autre que le numéro de téléphone. Il peut s'agir, par exemple, d'un matricule (numérique ou alphanumérique) établi par un organisme privé ou public, ou d'un identifiant universel attribuée à une personne physique ou morale.

Dans ce cas, l'unité 8 comprendra également dans ses bases de données les correspondances permettant d'associer une adresse physique à l'identifiant envisagé.

Il est notamment possible de prévoir des stratégies de recherche d'adresse selon l'identifiant reconnu dans le champ 56b. Par exemple, si le système est prévu principalement pour le routage dans un organisme ou une entreprise dans lequel les personnes sont identifiées par un matricule, la recherche d'adresse s'effectuera d'abord en supposant que le champ 56b contient ce matricule. En cas d'échec, la recherche se poursuivra sur une autre base de données, par exemple celle des abonnés téléphoniques, et ainsi de suite jusqu'à l'obtention de l'adresse.

Ces stratégies de recherche peuvent être guidées par la forme du contenu du champ 56b, par exemple en établissant qu'un numéro de dix chiffres doit correspondre à une adresse téléphonique, alors qu'un nombre à quatre chiffres correspond à un matricule ou un numéro de poste en interne.

Le routage peut ainsi servir à transférer des colis à différents sites d'un groupement administratif ou industriel désignés par un code.

Bien entendu, on peut envisager des systèmes d'identification plus complexes, reposant sur l'utilisation de plusieurs champs différents.

Par ailleurs, une autre base de données comporte des tables qui mettent en correspondance les secteurs géographiques des adresses postales identifiées par la ou les base(s) de données de l'unité 8 avec la Messagerie Unifiée attribuée à différents secteurs. Par exemple, une reconnaissance peut être réalisée au niveau du code postal, ou au nom de la commune pour identifier la MU du destinataire. Cette information sert à effectuer le routage automatique du colis électronique depuis la Messagerie Unifiée réceptrice vers la Messagerie Unifiée ouverte au bénéfice de récepteur.

Le plus souvent, dans le cadre d'un réseau important de MU, il sera nécessaire de transférer le colis de la MU réceptrice vers la MU affectée au destinataire, celle-ci n'étant généralement pas la même. Le transfert entre MU dans ce cas est réalisé avec le colis électronique sous forme cryptée par le réseau de communication interne qui lie les différentes MU du système. On peut aussi prévoir une Messagerie Unifiée qui sert uniquement de centre de réception de colis électroniques et de transfert de ces derniers vers la MU désignée pour le destinataire ou identifiée comme étant la plus propice pour l'adresse du destinataire.

Dans l'exemple, on considérera que l'aiguillage du colis vers la MU du destinataire a été réalisée en amont selon l'une des possibilités venant d'être présentées.

De manière pluri quotidienne, chaque Messagerie Unifiée effectue une conversion des colis électroniques reçus vers une forme matérielle. Dans l'exemple, cette conversion consiste à (cf. unité 10):
imprimer sur papier les messages écrits et contenus dans un colis électronique, et
graver sur CD ou enregistrer sur disquette des messages sons.

Les images électroniques pourront être au choix soit imprimées (si elles sont de type statique et d'un nombre raisonnable), soit transférées sur un support magnétique ou optique. De même, un document texte peut aussi, selon un choix, être sous forme de support magnétique ou optique. Le choix de la forme de mise en forme physique peut être laissé au niveau de la Messagerie Unifiée, ou exprimé selon un protocole avec le message électronique de l'expéditeur. Ainsi, un expéditeur sachant que le destinataire ne dispose pas d'outils informatiques pourra prescrire que son message doit obligatoirement être présenté sous forme de feuilles imprimées.

Chaque colis sous forme de feuille(s) et/ou de support(s) d'enregistrement (disquette, CD, etc.) est automatiquement mis sous plus (un pli par colis) et remis le jour même aux Services Postaux ou à un service de coursier, ou analogue (unité 12) pour être distribué à l'adresse obtenue à partir du numéro de téléphone ou de tout autre identifiant (unité 8).

Le système peut aussi permettre de transmettre le colis vers un destinataire D' qui possède une adresse de courrier électronique, par exemple dans le cas où l'émetteur E ignore l'existence d'une telle adresse, ou ne l'a pas à sa connaissance lors de l'envoi du colis. A cette fin, la messagerie universelle MU comprend des moyens de recherche d'une éventuelle adresse de courrier électronique du destinataire D' (unité 14). Il peut s'agir d'annuaires électroniques qui donnent en sortie l'adresse de courrier électronique à partir d'un numéro de téléphone ou autre identifiant. Si une telle adresse existe, le colis est immédiatement routé vers le courrier électronique de l'intéressé, qui peut ainsi recevoir un courrier électronique alors même que son correspondant ignorait son adresse courrier électronique et ne connaissait que son numéro de téléphone.

Afin de garantir la confidentialité du contenu des colis, il est mis en place un système de cryptage/décryptage au travers d'une barrière de protection, connue sous le terme anglo-saxon de "fire-wall", à l'entrée et à la sortie de la MU (unités 16 et 18 respectivement). Ce système garantit l'impossibilité de consultation par quiconque des colis, le décryptage 18 n'intervenant qu'à la sortie de la MU, au moment de l'impression ou l'enregistrement sur support magnétique ou optique, qui est automatiquement poursuivi sans intervention humaine par la mise sous pli automatique. La barrière est également utilisée lors d'un transfert de colis sous forme électronique d'une MU à une autre, par exemple pour le rapprocher du destinataire au niveau de la mise sous forme physique.

L'ensemble des données transitant dans chaque Messagerie Unifiée est archivé dans sa forme cryptée (unité 20), seul l'émetteur E pouvant solliciter du centre que lui soit réadressée à tout moment une copie de son envoi.

Chaque expédition de colis donne lieu à un compte-rendu des opérations effectuées, notamment pour assurer le traçabilité. Cette disposition est assurée par une unité de compte-rendu de traçage 29.

Passé un délai à définir, les données sont automatiquement détruites.

Les colis reçus sont immédiatement et automatiquement stockés pour archivage dans une MU correspondant à l'adresse du destinataire (prénom.nom.numéro de téléphone).

Un système logiciel (unité 22) calcule automatiquement le coût de la prestation d'envoi en fonction du nombre de pages nécessaires à l'impression, du nombre de CD ou autres supports d'enregistrement éventuellement nécessaire à l'envoi sous forme multimédia, du volume électronique transmis et du coût d'affranchissement postal. A partir de ces données de coût, la Messagerie Unifiée MU établit une pré-facturation (unité 24).

De manière toujours automatisée, le système confirme par courrier électronique à l'émetteur Internaute la prise en compte de sa demande et lui indique le coût en résultant (unité 26). A cette fin, l'adresse électronique de l'émetteur E est extraite automatiquement à partir du colis à expédier, cette adresse étant insérée automatiquement avec envoi du courrier selon le protocole classique qui permet, de manière générale connue, à tout récepteur destinataire d'un courrier électronique, de répondre par courrier électronique à l'expéditeur sans avoir à inscrire son adresse.

En réponse, l'émetteur peut alors confirmer par un simple "clic" depuis sa messagerie, son accord pour envoi et pour facturation directe sur sa facture téléphonique.

Dès lors, la procédure automatisée d'envoi est automatiquement déclenchée. Cette procédure met en oeuvre une centrale logistique sous forme physique (unité 28) équipée de moyens de calcul et de stockage 28' permettant de réaliser automatiquement un ensemble de tâches, dont :
- l'édition et d'impression et/ou enregistrement sur support des colis à mettre sous forme physique,
- la mise sous pli du colis, et
- l'affranchissement.

Ces tâches sont exécutées pour piloter l'unité 10 qui réalise la mise sous forme physique. Dans l'exemple, la centrale logistique est mise en oeuvre sous forme d'interface informatique de commande de l'unité 10, cette dernière étant un ensemble de traitement de courrier comprenant de manière combinée une imprimante, un dispositif de mise sous pli, et un dispositif d'affranchissement. Le dispositif de mise sous pli est adapté pour traiter à la fois les documents issus de l'imprimante et les supports enregistrables (CD, disquettes et analogues) provenant de lecteurs et de graveurs adaptés pour enregistrer les données image ou audio contenues dans le colis.

Une fois la mise sous forme physique réalisée, le pli P issu de l'unité 10 est recueilli par un service d'acheminement de courrier 12, par exemple un service de la Poste, pour être livré à l'adresse du destinataire D. Dans l'exemple, le pli P contenant le colis remis en Poste le jour même ou, en dehors des heures ouvrées, le lendemain matin.

Comme indiqué précédemment, le coût de la prestation sera reporté sur la facture de l'opérateur lors du prochain relevé adressé par l'opérateur à l'Internaute. Le destinataire reçoit donc sous pli postal le contenu sous forme physique du colis selon l'acheminement habituel.

Le colis sous forme physique contient en outre une étiquette autocollante correspondant aux coordonnées postales du Centre Courrier, soit Mailpublica.COM dans l'exemple, assortie des références électroniques de l'émetteur.

Ainsi, si le destinataire D non-Internaute le souhaite, il peut adresser toute réponse physique glissée dans une enveloppe sur laquelle sera apposée l'étiquette autocollante, ladite enveloppe une fois timbrée et remise en poste par le non-Internaute étant automatiquement réceptionnée par le Centre Mailpublica.COM.

On note que s'il est détecté par la recherche de correspondance no. de téléphone → adresse électronique (unité 14) que le destinataire D' possède en fait une adresse électronique, celui-ci reçoit électroniquement le colis à son adresse courrier électronique habituelle et/ou le consulte sur sa MU.

Le système permet également de prévoir une transmission de courrier dans le cas inverse, c'est-à-dire où l'émetteur du courrier transmet celui-ci sous forme de support physique en vue de le faire acheminer sous forme électronique vers le destinataire.

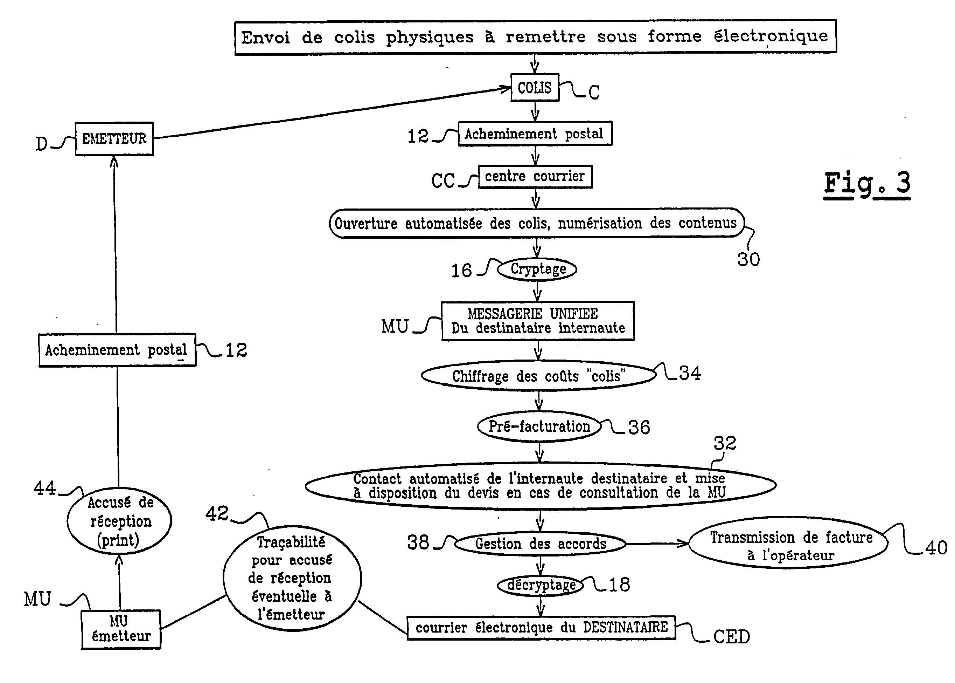

Cet aspect de l'invention sera présenté par référence à l'organigramme de la figure 3, où les unités fonctionnelles analogues à celles de la figure 1 portent les mêmes références et ne seront pas décrits à nouveau par souci de concision.

L'émetteur D prépare son courrier sous forme physique. Ce courrier peut être constitué de support papier imprimé (caractères et images) ou manuscrit, de support magnétique ou optique enregistré (courrier multimédia), ou tout autre contenu susceptible d'être numérisé. Ce pli est mis dans un colis C à l'adresse physique d'un Centre Courrier CC. Il peut s'agir d'une antenne qui constitue un centre de traitement adapté, de tels centres étant répartis sur le territoire de couverture de service, ou d'une Messagerie Unifiée MU se trouvant à proximité, également doté de moyens adaptés à cette fonction de Centre Courrier.

L'acheminement du colis C vers le Centre Courrier CC peut être effectué par des moyens courants : services postaux, services de courrier privés, coursiers, relais de dépôt pour retrait par un service de navette (des relais peuvent ainsi être installés dans des commerces, à des guichets ouverts au public, etc.).

Le Centre Courrier ouvre le contenu du colis C en provenance de l'émetteur non-Internaute et le traite par numérisation afin de traduire sous forme électronique l'envoi réceptionné (unité 30). Cette opération d'ouverture et de numérisation peut être effectuée automatiquement par des machines de traitement de courrier et d'analyseurs (scanners) installés dans une chaîne de traitement.

L'information ainsi numérisée est d'abord cryptée (unité 16), puis immédiatement transmise vers une Messagerie Unifiée ouverte au nom de l'Internaute destinataire, où elle y est intégrée. La transmission électronique du Centre Courrier CC vers la Messagerie Unifiée précitée peut se faire par courrier électronique sur Internet, ou par réseau interne de communication, par exemple un réseau Intranet ou par des lignes propriétaires.

Le destinataire D est alors informé par courrier électronique électroniquepublica.COM de l'arrivée à son bénéfice d'un colis sous forme dématérialisée. Cette prestation est gérée par une interface logicielle spécifique (unité 32) au niveau de la Messagerie Unifiée MU.

Il peut aussi directement interroger sa MU, laquelle liste les colis reçus et consultables.

Au préalable, le courrier électronique d'annonce d'arrivée de nouveaux messages et/ou la page d'accueil de la MU comporte le coût de la consultation, lui-même automatiquement calculé en fonction du nombre de pages numérisées, du volume électronique des données, etc (unité 34).

Ce chiffrage est alors traité pour réaliser une pré-facturation (unité 36), dont le contenu est transmis au destinataire D.

Une unité traite l'éventuel accord du destinataire D à recevoir le courrier annoncé (unité 38) .

Dès lors, l'Internaute concerné peut demander l'envoi du message, ou le provoque directement par lecture de sa MU en lecture ; il reçoit alors le "colis" sur son courrier électronique habituel (CED) et le coût lui en est facturé directement par l'opérateur sur son prochain relevé téléphonique.

Avant transmission vers le destinataire, le message sous forme électronique est crypté (unité 18) pour garantir la confidentialité de son contenu.

La facturation des prestations est gérée par une unité comptabilisation 40, en fonction entre autres des accords de transmission gérés par l'unité 38 précitée. L'unité de comptabilisation 40 établit périodiquement pour chaque client destinataire de courrier une facture prenant en compte divers paramètres : volume total du courrier accepté, nombre de courriers reçus, courriers soumis en pré-facturation, éventuellement refusés, charges fixes, etc. De même, il peut être prévu une facturation sur des bases similaires à l'intention des expéditeurs. Dans ce cas, la facture sera transmise par courrier sous forme physique.

Diverses options peuvent être offertes à l'Internaute émetteur E, notamment des options d'envoi en recommandé avec accusé de réception.

L'accusé de réception est alors géré par la Messagerie Unifiée MU. A cette fin, il est prévu une unité de traçabilité 42 directement accessible par le destinataire D via son courrier électronique. Dans l'exemple, cette unité 42 présente à la demande un bordereau affiché sur l'écran avec le courrier reçu. Ce bordereau électronique présente les informations relatives à l'expéditeur E (adresse, date d'envoi, identification des pièces constitutives du courrier, etc.) et des champs à remplir par le destinataire. Ceux-ci peuvent comprendre notamment des champs pour entrer la date et l'heure de réception, des commentaires ou observations, etc.

Le destinataire ayant rempli le bordereau électronique peut alors le transmettre vers l'émetteur. A cette fin, une procédure de mise sous forme physique du bordereau est mise en place, mettant en oeuvre des moyens analogues à ceux présentés dans le cadre de la figure 1 pour l'envoi électronique.

Ainsi, le bordereau électronique est transmis vers la Messagerie Unifiée la plus proche de son destinataire (i.e. l'émetteur E du courrier), où il sera imprimé (unité 44), puis acheminé sous cette forme physique à l'adresse du destinataire E par l'un des divers moyens précités d'acheminement de courrier physique.

L'invention prévoit en outre diverses options ouvertes lors de l'émission d'un colis, que ce soit à partir d'une forme électronique (immatérielle) (cf. figure 2, ou physique (matérielle) (cf. figure 3).

Le système peut prévoir la mise en place d'une option d'envoi gratuit, avec en compensation l'insertion de messages publicitaires dans l'accusé de réception que lui adressera le Centre Mailpublica.COM, voire à l'intérieur des plis qui seront envoyés à son destinataire, envois urgents par porteur, etc ...

Ces options sont choisies très simplement par ajout de terminaisons au nom de domaine (partie 54, cf. figure 2) lors de l'envoi :
Courrier recommandé : Mailpublica.Rec.Com;
Courrier gratuit :Mailpublica.Pub.Com ;
Courrier urgent : Mailpublica.Exprès.Com, etc ...

Dans ces exemples, l'expéditeur du courrier électronique désigne l'option choisie sous forme d'extension au nom du domaine du prestataire du service "Mailpublica". Ici, l'option désignée apparaît dans un champ option immédiatement après le point qui suit le nom, et juste avant le suffixe ".com".

Dans ce cas, la Messagerie Unifiée MU réceptrice du message procède à une identification du champ option et pilote le processus de traitement en fonction du contenu de champ. Une routine "normale" telle que décrite par référence à la figure 1 est installée par défaut, en l'absence d'un champ option.

Ainsi, la Messagerie Unifiée va automatiquement analyser le champ option pour :
- à la détection du champ égal à "Rec", activer les moyens de d'émission et de gestion du bordereau électronique d'accusé de réception;
- à la détection du champ égal à "Pub", inhiber la facturation relative au courrier en cours de traitement et insérer dans celle-ci une publicité, et
- à la détection du champ égal à "Exprès", faire transmettre avec le courrier en cours un message, lisible par la Messagerie Unifiée MU du destinataire, indiquant que celui-ci doit être traité comme urgent. En réponse, cette Messagerie déclenchera automatiquement un processus permettant d'accélérer la phase d'acheminement du courrier sous forme physique, par exemple en le faisant confier à un coursier.

Il est possible d'organiser l'identification de sorte que plusieurs options puissent être activées simultanément pour un courrier, par exemple en utilisant une concaténation des champs option, du type électroniquepublica.option1; option2; ...; option n.com. Ainsi le choix d'un envoi en exprès et avec accusé de réception est possible en utilisant la formulation électroniquepublica.Exprès; Rec.com

De nombreuses autres options peuvent être imaginées telles par exemple, le lien avec une boutique cadeaux en ligne permettant par exemple de faire accompagner le message par un envoi de fleurs ou autre présent de valeur modique.

Enfin, le non Internaute qui souhaite devenir Internaute peut se faire attribuer une MU correspondant à son numéro de téléphone qui lui donnera droit à un accès Internet et surtout à une adresse courrier électronique qui lui permettra dorénavant de recevoir tout courrier électronique qui lui serait adressé sur la base de son prénom.nom.numéro de téléphone @Mailpublica.com.

L'invention prévoit en outre la possibilité d'attacher une signature électronique à un courrier, et ce dans les deux sens grâce à un Prestataire de Service de Certification (PSC).

La signature a pour vocation d'offrir aux entreprises et aux consommateurs une solution sécurisée d'authentification et d'archivage, soit de manière autonome, soit de manière complémentaire par rapport au système décrit plus haut.

On sait que la Loi du 13 mars 2000 modifiant le Code Civil a adapté le Droit français de la preuve à l'évolution des technologies en étendant le régime habituel de la preuve littérale à l'ensemble des écrits dématérialisés. ,

Ainsi a été consacrée la valeur probante de l'écrit informatique.

Mais ainsi aussi a été mis en place un mécanisme de garantie de cette valeur probante dans le cadre de procédures dont certaines restent à être précisées par des Décrets ou Arrêtés en cours d'élaboration.

Ce mécanisme est orienté autour de deux troncs principaux, savoir :
i) Que l'écrit électronique soit à nouveau intelligible.
ii) Que soit dûment identifié celui dont il émane.

En outre, cet écrit doit être établi et conservé dans des conditions de nature à en garantir l'intégrité.

Ainsi doivent être mis en place des Prestataires de Services de Certification (PSC), organismes privés indépendants qui sont chargés de délivrer des certificats électroniques garantissant le lien entre l'identité d'une personne et un dispositif permettant de vérifier la signature électronique émise par cette personne.

Leur rôle sera donc d'identifier le signataire mais pas de certifier le contenu des messages.

Toutefois, la certification pourrait aller jusqu'à porter sur les données telles que la date et l'heure, la durée de validité de la signature ou les pouvoirs du signataire.

Le recours aux PSC s'appuie sur un savoir-faire procédural et juridique, mais aussi sur des moyens techniques et notamment de cryptologie particulièrement élaborés.

L'invention permet, au besoin, de concevoir le système décrit par référence aux figures 1 et 2 en outre comme un authentique prestataire de services de certification (PSC).

Qui plus est et en outre, le système peut, dans le prolongement de ses fonctionnalités ci-avant, s'ériger en véritable Centre d'archivage Sécurisé et Agréé.

Pour ce faire, il met en oeuvre un système automatisé d'archivage en ligne qui s'appuiera sur un système de facturation à l'abonnement et/ou à la prestation d'archivage et/ou de consultation grâce au recours au système de comptage des contenus transférés à l'aide des outils présentés au début du présent document.

A cette fin, le système s'appuie de manière exhaustive et rigoureuse aux critères normatifs d'ores et déjà mis en place en matière d'archivage électronique.

Il peut à ce titre servir de référence de garantie de conservation et de sécurisation des données archivées, ces dernières se devant pouvoir être restituées de manière certifiée quant à leur conformité à la donnée originellement archivée, à leur intégrité ainsi qu'à l'auteur des informations éventuellement certifiées y contenues.

Le système peut en outre asseoir sa crédibilité en se faisant labelliser par des organismes notoires comme par exemple l'APP ou Association pour la Protection des Programmes.

Compte tenu du développement de l'EDI et des normes y associées, ce service permet un recours crédible par les utilisateurs à la dématérialisation de leurs échanges.

Le système peut être mis en oeuvre avec une collaboration étroite avec certains partenaires et notamment :
- un système permettant le comptage des contenus voyageant sous le Net de manière multicritère et ouvrant la possibilité de facturation sous le réseau selon le modèle Minitel directement par l'Opérateur. Un tel système est décrit notamment dans la demande de brevet précitée.

Le système peut par ailleurs évoluer vers une communication en B to C.

L'exemple a été décrit en détaillant surtout le cas d'une expédition de colis par courrier électronique envoyé sur le réseau Internet. Il est cependant clair que tout le processus d'acheminement, de facturation et de certification peut aussi bien être réalisé dans cadre d'une expédition à partir d'un terminal téléphonique mobile utilisant une messagerie ou une connexion adaptée sur Internet, tel que le système WAP (acronyme de l'expression anglo-saxonne "Wireless Application Protocol") ou le protocole UMTS (acronyme de l'expression anglo-saxonne "Universal Mobile Telecommunication System"), ou encore à partir d'un téléphone mobile ou fixe avec transmission du message sous forme sonore.

Dans ce dernier cas, l'expéditeur appelle une Messagerie Unifiée via son adresse téléphonique, celle-ci pouvant être une ligne groupée. En réponse, la Messagerie Unifiée le connecte à un serveur vocal grâce auquel il peut donner et recevoir les informations administratives (entrer l'adresse téléphonique du destinataire, son numéro de téléphone, etc.) et enregistrer le message sonore pour le destinataire. Une fois l'enregistrement effectué, le serveur vocal indique à l'expéditeur le coût de l'envoi du colis, celui-ci étant établi sur, des critères analogues (longueur du message, situation géographique du destinataire, options exprès, recommandé, certification, etc.). L'expéditeur peut donc donner son accord pour l'acheminement du colis. Celui-ci sera alors transmis sous forme numérisée et cryptée vers la MU du destinataire, ou il sera mis sous forme de support enregistré (cassette audio, disquette, etc.) ou encore retranscrit sous forme imprimée par reconnaissance de la parole. Le colis ainsi mis en forme est livré au destinataire selon les modalités déjà décrites.

On comprendra que la distribution des tâches peut être modifiée tout en restant dans le cadre de l'invention. A titre d'exemple, il est possible d'utiliser des moyens préexistants pour mettre en oeuvre certaines parties de l'invention. Outre le réseau Internet et les messageries électroniques, il est possible d'utiliser des ressources déjà installées pour faire effectuer la conversion de colis électroniques en forme physique et l'acheminement vers de destinataire.

L'invention peut être mise oeuvre par des outils informatiques tant au niveau du terminal émetteur 2, 4, 6 qu'au niveau des unités de gestion (ensemble de gestion) MU. Elle peut ainsi être matérialisée par un support (composé d'un ou de plusieurs éléments, par exemple plusieurs cédéroms)contenant du code logiciel qui, lorsque chargé dans des moyens informatiques du terminal émetteur et/ou de l'ensemble de gestion, permet l'exécution de ses fonctions caractéristiques.

## Revendications

1. Procédé d'acheminement de courrier émis sous forme électronique depuis un terminal (2, 4, 6), pour remise à un destinataire (D) à l'adresse physique de ce dernier et sur un support matériel,
**caractérisé en ce qu'**il comprend les étapes :
au niveau du terminal (2, 4, 6) de l'émetteur (E), de :
- prévoir un champ associé au courrier à émettre, et dans lequel l'émetteur inscrit une information (56) identifiant le destinataire (D), cette information étant autre que l'adresse physique du destinataire, et
- transmettre le courrier sous forme électronique à un ensemble de gestion (MU), et
au niveau de l'ensemble de gestion (MU), de:
- prévoir une base de données (14) établissant un lien de correspondance entre l'information identifiant le destinataire et l'adresse physique du destinataire pour un ensemble de destinataires,
- réceptionner ledit courrier et lire l'information identifiant le destinataire inscrite dans ledit champ,
- déterminer par référence à ladite base de données l'adresse physique du destinataire qui correspond à l'information identifiant le destinataire lue,
- transcrire le contenu du courrier reçu sous forme électronique sur un support matériel, et
- expédier ledit support matériel à ladite adresse physique déterminée.

2. Procédé selon la revendication 1, **caractérisé en ce que** le courrier est émis vers une adresse électronique (54) de l'ensemble de gestion (MU), et **en ce que** l'information (56) identifiant le destinataire (D) est intégrée à ladite adresse électronique.

3. Procédé selon la revendication 2, **caractérisé en ce que** l'adresse électronique (54) de l'ensemble de gestion (MU) comporte un nom de domaine sur Internet, l'information (56) identifiant le destinataire (D) étant intégrée au nom de domaine pour former une adresse Internet personnalisée d'identification du destinataire (52).

4. Procédé selon la revendication 3, **caractérisé en ce que** ladite adresse personnalisée d'identification du destinataire (52) se présente selon le format comprenant la séquence :
"Identifiant du destinataire@Nom de domaine",

5. Procédé selon l'une quelconque des revendications 1 à 4, **caractérisé en ce que** l'information (56) identifiant le destinataire comprend un numéro de téléphone (56b) du destinataire.

6. Procédé selon la revendication 5, **caractérisé en ce que** l'information identifiant le destinataire comprend en outre le nom (56a) du destinataire.

7. Procédé selon l'une quelconque des revendications 1 à 6, **caractérisé en ce que** l'émission du courrier est réalisée directement à partir d'une messagerie électronique classique d'envoi de courrier électronique, sans avoir à entrer dans un site spécifique.

8. Procédé selon l'une quelconque des revendications 1 à 7, **caractérisé en ce qu'**il opère dans le cadre d'un service sans abonnement, le procédé comprenant en outre les étapes de :
- établir un coût à payer pour l'acheminement du courrier,
- transmettre des données correspondant à au moins une partie dudit coût à un prestataire d'autres services auquel est lié l'émetteur (E) ou le destinataire (D), et
- faire intégrer lesdites données dans la facturation émise par ledit prestataire.

9. Procédé selon la revendication 8, **caractérisé en ce que** ledit prestataire de services est un fournisseur d'accès aux moyens de communication du courrier sous forme électronique depuis l'émetteur (E) du courrier ou vers le destinataire (D) du courrier, notamment un fournisseur d'accès sur Internet ou un opérateur télécom.

10. Procédé selon l'une quelconque des revendications 1 à 9, **caractérisé en ce qu'**il consiste en outre à prévoir une adresse téléphonique avec accueil sur un service d'enregistrement de courrier sous forme sonore, accessible à un émetteur (E) de courrier sous forme électronique, présentant en outre un champ temporel d'enregistrement de l'information identifiant le destinataire sous forme sonore, lequel constitue ledit champ associé, la transcription vers la forme physique au niveau de l'ensemble de gestion (MU) s'effectuant par transfert du message sonore sur un support physique portatif livré au destinataire (D).

11. Procédé selon l'une quelconque des revendications 1 à 10, **caractérisé en qu'**il prévoit de permettre à un émetteur (D) de courrier sous forme électronique de spécifier un service optionnel relatif à l'acheminement de ce courrier, dont au moins l'un parmi:
- un acheminement avec accusé de réception (AEC),
- un acheminement avec livraison en exprès du courrier transformé en sa forme physique (EXP),
- un acheminement sans frais moyennant l'introduction de message(s) publicitaire(s) dans ledit courrier (PUB).

12. Procédé selon la revendication 11, **caractérisé en ce que**, l'adresse électronique d'un ensemble de gestion (MU) qui réceptionne un courrier sous forme électronique se présentant sous forme de nom de domaine sur Internet, il prévoit de permettre la sélection dudit service optionnel par intégration d'un code d'identification dudit service (REC, EXP, PUB) à ladite adresse électronique.

13. Procédé selon l'une quelconque des revendications 1 à 12, **caractérisé en ce que** la conversion d'un courrier de sa forme électronique vers sa forme physique est effectuée à un ensemble de gestion, parmi un réseau de tels ensembles (MU), affecté au destinataire (D) selon des critères préétablis, par exemple en fonction de la proximité, cet ensemble de gestion effectuant au moins l'une des étapes parmi :
- l'impression du document sur support physique dans le cas d'un courrier électronique comportant des données destinées à être imprimées (texte, images); et
- l'enregistrement des données électroniques sur un support optique ou magnétique dans le cas de données sonores, d'images ou autre, ou lorsque l'utilisation d'un support est demandée lors de l'émission du courrier.

14. Procédé selon l'une quelconque des revendications 1 à 13, **caractérisé en ce qu'**il prévoit en outre l'acheminement de courrier émis sous forme physique, la conversion de ce courrier vers une forme électronique et sa livraison sous cette forme électronique, le procédé comprenant au moins l'une des étapes parmi:
- l'analyse optique pour numérisation en vue de l'intégration des données de numérisation dans le courrier sous forme électronique; et
- l'extraction de données contenues dans un support d'enregistrement en vue de l'intégration de celles-ci dans le courrier sous forme électronique.

15. Procédé selon l'une quelconque des revendications 1 à 14, **caractérisé en ce qu'**il comprend en outre, préalablement à l'acheminement du courrier au destinataire, les étapes de:
- établir un prix de prestation et de transmission,
- transmettre un message électronique indiquant ledit prix à l'expéditeur (E) ou au destinataire (D) du courrier sous forme électronique,
- attendre en réponse un message d'accord dudit expéditeur ou destinataire,
- faire aboutir l'acheminement du courrier vers ledit destinataire (D) en fonction du message d'accord.

16. Procédé selon l'une quelconque des revendications 1 à 15, **caractérisé en ce qu'**il comprend en outre de prévoir un transit sous forme cryptée des données constitutives d'un courrier sous forme électronique sur au moins une partie de son acheminement.

17. Procédé selon l'une quelconque des revendications 1 à 16, **caractérisé en ce qu'**il comprend en outre l'étape de lier une signature électronique au courrier dans sa forme électronique.

18. Procédé selon la revendication 17, **caractérisé en ce qu'**il prévoit une authentification de ladite signature électronique conformément à une convention établie.

19. Procédé selon la revendication 18, **caractérisé en que** ladite convention est gérée au niveau d'un ensemble (MU) qui gère en outre ledit procédé d'acheminement.

20. Procédé selon l'une quelconque des revendications 1 à 19, **caractérisé en ce qu'**il comprend en outre l'étape d'archiver des courriers sous forme électronique, avant ou après transformation, éventuellement avec une signature électronique.

21. Procédé selon l'une quelconque des revendications 1 à 20, **caractérisé en ce que** qu'il comprend en outre l'étape, dans le cas d'une émission de courrier sous forme électronique, de chercher une éventuelle adresse électronique du destinataire (D') et, dans le cas d'une identification d'une telle adresse, d'acheminer le courrier sous forme électronique vers ladite adresse sans effectuer ladite transformation.

22. Système d'acheminement de courrier émis sous forme électronique depuis un terminal, pour remise à un destinataire (D) à l'adresse physique de ce dernier et sur un support matériel,
**caractérisé en ce qu'**il comprend:
au niveau du terminal (2, 4, 6) de l'émetteur (E) :
- des moyens de présentation d'un champ associé au courrier à émettre et de gestion d'une information (56) identifiant le destinataire (D) contenue dans ce champ, cette information étant autre que l'adresse physique du destinataire, et
- des moyens de transmission du courrier sous forme électronique à un ensemble de gestion (MU), et
au niveau de l'ensemble de gestion (MU) :
- une base de données (14) établissant un lien de correspondance entre ladite information identifiant le destinataire et l'adresse physique du destinataire pour un ensemble de destinataires,
- des moyens pour réceptionner ledit courrier et lire ladite information identifiant le destinataire inscrite dans ledit champ,
- des moyens pour déterminer par référence à ladite base de données l'adresse physique du destinataire qui correspond à l'information identifiant le destinataire lue,
- des moyens pour transcrire le contenu du courrier reçu sous forme électronique sur un support matériel, et
- des moyens assurant l'expédition du support matériel à ladite adresse physique déterminée.

23. Système selon la revendication 22, **caractérisé en ce qu'**il configuré pour réaliser le procédé selon l'une quelconque des revendications 1 à 21.

24. Terminal (2, 4, 6) du système selon la revendication 22 ou 23, **caractérisé en ce qu'**il comprend :
- des moyens de présentation d'un champ associé au courrier à émettre et de gestion d'une information identifiant le destinataire (D) contenue dans ce champ, cette information étant autre que l'adresse physique du destinataire, et
- des moyens de transmission du courrier sous forme électronique à un ensemble de gestion (MU).

25. Ensemble de gestion (MU) du système selon la revendication 22 ou 23, **caractérisé en ce qu'**il comprend :
- une base de données (14) établissant un lien de correspondance entre l'information identifiant le destinataire et l'adresse physique du destinataire pour un ensemble de destinataires,
- des moyens pour réceptionner ledit courrier et lire l'information identifiant le destinataire inscrite dans ledit champ,
- des moyens pour déterminer par référence à ladite base de données l'adresse physique du destinataire qui correspond à l'information identifiant le destinataire lue,
- des moyens pour transcrire le contenu du courrier reçu sous forme électronique sur un support matériel, et
- des moyens assurant l'expédition du support matériel à ladite adresse physique déterminée.

26. Support d'enregistrement exploitable par un ordinateur, le support comportant un programme informatique permettant l'exécution du procédé selon l'une quelconque des revendications 1 à 21 au niveau du terminal (2, 4, 6) et/ou au niveau d'un ensemble de gestion (MU).

## Claims

1. Method for sending mail transmitted in electronic form from a terminal (2, 4, 6) in order to deliver the mail to an addressee (D) to the physical address of the addressee and on a physical medium,
**characterised in that** the method comprises the following steps:
at the terminal (2, 4, 6) of the transmitter (E):
- providing a field associated with the mail to be transmitted, and wherein the transmitter enters information (56) identifying the addressee (D), this information being information other than the physical address of the addressee, and
- transmitting the mail in electronic form to a management unit (MU), and
at the management unit (MU):
- providing a database (14) establishing a correspondence link between the information identifying the addressee and the physical address of the addressee for a set of addressees,
- receiving said mail and reading the information identifying the addressee entered in said field,
- determining by referring to said database the physical address of the addressee which corresponds to the read information identifying the addressee,
- transcribing the content of the mail received in electronic form onto a physical medium, and
- sending said physical medium to said determined physical address.

2. Method as claimed in Claim 1, **characterised in that** the mail is transmitted to an electronic address (54) of the management unit (MU), and **in that** the information (56) identifying the addressee (D) is incorporated in said electronic address.

3. Method as claimed in Claim 2, **characterised in that** the electronic address (54) of the management unit (MU) comprises an Internet domain name, the information (56) identifying the addressee (D) being incorporated in the domain name in order to form an addressee-identifying personalised Internet address (52).

4. Method as claimed in Claim 3, **characterised in that** said addressee-identifying personalised address (52) is in the format comprising the sequence:
"Identifier of addressee@domain name",

5. Method as claimed in any one of Claims 1 to 4, **characterised in that** the information (56) identifying the addressee comprises a telephone number (56b) of the addressee.

6. Method as claimed in Claim 5, **characterised in that** the information identifying the addressee also comprises the name (56a) of the addressee.

7. Method as claimed in any one of Claims 1 to 6, **characterised in that** the mail is transmitted directly from a conventional electronic messaging system for transmitting electronic mail, without having to enter a specific site.

8. Method as claimed in any one of Claims 1 to 7, **characterised in that** it is performed within the framework of a subscription-free service, the method also comprising the following steps:
- establishing a cost to be paid for sending the mail,
- transmitting data corresponding to at least one part of said cost to a provider of other services to which the transmitter (E) or the addressee (D) is linked, and
- ensuring that said data are incorporated in the invoice sent by said provider.

9. Method as claimed in Claim 8, **characterised in that** said service provider is a provider of access to the means for communicating the mail in electronic form from the transmitter (E) of the mail or to the addressee (D) of the mail, in particular an Internet service provider or a telecom operator.

10. Method as claimed in any one of Claims 1 to 9, **characterised in that** it further consists of providing a telephone address with a service for recording mail in the form of sound which is accessible by a transmitter (E) of mail in electronic form, also having a temporal field for recording addressee-identifying sound information, which constitutes said associated field, transcription into physical form at the management unit (MU) being performed by transferring the sound message onto a portable physical medium delivered to the addressee (D).

11. Method as claimed in any one of Claims 1 to 10, **characterised in that** there is provided the possibility for a transmitter (D) of mail in electronic form to specify an optional service relating to the forwarding of this mail, selected from at least one of:
- sending with acknowledgement of receipt (AEC),
- sending with express delivery of the mail converted into its physical form (EXP),
- cost-free sending by incorporating advertisement(s) in said mail (PUB).

12. Method as claimed in Claim 11, **characterised in that** since the electronic address of a management unit (MU) which receives mail in electronic form is in the form of an Internet domain name, there is provided the possibility for said optional service to be selected by incorporating an identification code of said service (REC, EXP, PUB) in said electronic address.

13. Method as claimed in any one of Claims 1 to 12, **characterised in that** mail is converted from its electronic form into its physical form in a management unit, from a network of such units (MU), allocated to the addressee (D) in accordance with predetermined criteria, for example according to the proximity, this management unit performing at least one of the following steps:
- pririting the document onto a physical medium if the electronic mail has data intended to be printed (text, images); and
- recording the electronic data onto an optical or magnetic medium if the data are sound data, image data or the like, or when the use of a medium is requested upon transmission of the mail.

14. Method as claimed in any one of Claims 1 to 13, **characterised in that** there is further provided forwarding of mail transmitted in physical form, converting this mail into electronic form and delivering this mail in this electronic form, the method comprising at least one of the following steps:
- optical analysis for digitising, so as to incorporate digitising data in the mail in electronic form; and
- extracting data contained in a recording medium so as to incorporate said data in the mail in electronic form.

15. Method as claimed in any one of Claims 1 to 14, **characterised in that** it further comprises, prior to sending the mail to the addressee, the following steps:
- establishing a service and transmission price;
- transmitting an electronic message indicating said price to the sender (E) or to the addressee (D) of the mail in electronic form,
- waiting for a response in the form of a message of agreement from said sender or addressee,
- ensuring that the mail is correctly sent to said addressee (D) according to the message of agreement.

16. Method as claimed in any one of Claims 1 to 15, **characterised in that** it further comprises passing in encrypted form the constitutive data of an item of mail in electronic form over at least one part of its journey.

17. Method as claimed in any one of Claims 1 to 16, **characterised in that** it further comprises the step of attaching an electronic signature to the mail in its electronic form.

18. Method as claimed in Claim 17, **characterised in that** there is provided authentication of said electronic signature in accordance with an established convention.

19. Method as claimed in Claim 18, **characterised in that** said convention is generated at a unit (MU) which also manages said sending method.

20. Method as claimed in any one of Claims 1 to 19, **characterised in that** it further comprises the step of archiving mail in electronic form, before or after conversion, possibly with an electronic signature.

21. Method as claimed in any one of Claims 1 to 20, **characterised in that** it further comprises the step of, in the case of transmitting mail in electronic form, searching for a possible electronic address of the addressee (D') and, in the case of identifying such an address, sending the mail in electronic form to said address without performing said conversion.

22. System for sending mail transmitted in electronic form from a terminal in order to deliver the mail to an addressee (D) to the physical address of the addressee and on a physical medium,
**characterised in that** the system comprises:
at the terminal (2, 4, 6) of the transmitter (E):
- means for providing a field associated with the mail to be transmitted and for managing information (56) identifying the addressee (D), this information being contained in this field and being information other than the physical address of the addressee, and
- means for transmitting the mail in electronic form to a management unit (MU), and
at the management unit (MU):
- a database (14) establishing a correspondence link between said information identifying the addressee and the physical address of the addressee for a set of addressees,
- means for receiving said mail and reading said information identifying the addressee entered in said field,
- means for determining by referring to said database the physical address of the addressee which corresponds to the read information identifying the addressee,
- means for transcribing the content of the mail received in electronic form onto a physical medium, and
- means for sending the physical medium to said determined physical address.

23. System as claimed in Claim 22, **characterised in that** it [is] configured to perform the method as claimed in any one of Claims 1 to 21.

24. Terminal (2, 4, 6) of the system as claimed in Claim 22 or 23, **characterised in that** it comprises :
- means for providing a field associated with the mail to be transmitted and for managing information identifying the addressee (D), this information being contained in this field and being information other than the physical address of the addressee, and
- means for transmitting the mail in electronic form to a management unit (MU).

25. Management unit (MU) of the system as claimed in Claim 22 or 23, **characterised in that** it comprises:
- a database (14) establishing a correspondence link between the information identifying the addressee and the physical address of the addressee for a set of addressees,
- means for receiving said mail and reading the information identifying the addressee entered in said field,
- means for determining by referring to said database the physical address of the addressee which corresponds to the read information identifying the addressee,
- means for transcribing the content of the mail received in electronic form onto a physical medium, and
- means for sending the physical medium to said determined physical address.

26. Computer-operable recording medium having a computer programme enabling the method as claimed in any one of Claims 1 to 21 to be performed at the terminal (2, 4, 6) and/or at a management unit (MU).

## Patentansprüche

1. Verfahren zum Befördern von Post, die in elektronischer Form ausgehend von einem Endgerät (2, 4, 6) verschickt wird, um einem Empfänger (D) an seiner realen Adresse und auf einem materiellen Träger zugestellt zu werden,
**dadurch gekennzeichnet, dass**
es die Schritte umfasst:
seitens des Endgeräts (2, 4, 6) des Senders (E):
- einen der zu verschickenden Post zugeordneten Bereich vorzusehen, in den der Sender eine Information (56) einträgt, die den Empfänger (D) kennzeichnet, wobei diese Information eine andere als die reale Adresse des Empfängers ist, und
- die Post in elektronischer Form an eine Verwaltungseinheit (MU) zu übertragen, und
seitens der Verwaltungseinheit (MU):
- eine Datenbank (14) vorzusehen, die für eine Gruppe von Empfängern eine Zuordnungsverknüpfung zwischen der Information, die den Empfänger kennzeichnet, und der realen Adresse des Empfängers herstellt,
- die Post entgegenzunehmen und die den Empfänger kennzeichnende Information auszulesen, die in den Bereich eingetragen wurde,
- durch Bezugnahme auf die Datenbank die reale Adresse des Empfängers zu bestimmen, die der ausgelesenen, den Empfänger kennzeichnenden Information entspricht,
- den Inhalt der in elektronischer Form eingegangenen Post auf einen materiellen Träger zu übertragen, und
- den materiellen Träger an die bestimmte reale Adresse zu versenden.

2. Verfahren nach Anspruch 1,
**dadurch gekennzeichnet, dass**
die Post zu einer elektronischen Adresse (54) der Verwaltungseinheit (MU) geschickt wird, und dass die den Empfänger (D) kennzeichnende Information (56) in diese elektronische Adresse integriert ist.

3. Verfahren nach Anspruch 2,
**dadurch gekennzeichnet, dass**
die elektronische Adresse (54) der Verwaltungseinheit (MU) eine Internet-Domänenbezeichnung umfasst, wobei die den Empfänger (D) kennzeichnende Information (56) in die Domänenbezeichnung integriert ist, um eine personalisierte Internet-Adresse zur Kennzeichnung des Empfängers (52) zu bilden.

4. Verfahren nach Anspruch 3,
**dadurch gekennzeichnet, dass**
die personalisierte Adresse zur Kennzeichnung des Empfängers (52) sich in dem Format darstellt, das die Sequenz:
"Kennung des Empfängers@Domänenbezeichnung"
umfasst.

5. Verfahren nach einem der Ansprüche 1 bis 4,
**dadurch gekennzeichnet, dass**
die den Empfänger kennzeichnende Information (56) die Telefonnummer (56b) des Empfängers umfasst.

6. Verfahren nach Anspruch 5,
**dadurch gekennzeichnet, dass**
die den Empfänger kennzeichnende Information außerdem den Namen (56a) des Empfängers umfasst.

7. Verfahren nach einem der Ansprüche 1 bis 6,
**dadurch gekennzeichnet, dass**
der Versand der Post ausgehend von einem herkömmlichen elektronischen Postdienst zum Versand von elektronischer Post direkt erfolgt, ohne dass dabei auf eine spezielle Web-Site zugegriffen werden muss.

8. Verfahren nach einem der Ansprüche 1 bis 7,
**dadurch gekennzeichnet, dass**
es im Rahmen eines grundgebühxfxeien Dienstes abläuft, .wobei das Verfahren darüber hinaus die Schritte umfasst:
- die für den Versand der Post zu zahlenden Kosten festzulegen,
- Daten, die zumindest einem Teil dieser Kosten entsprechen, an einen Anbieter anderer Dienstleistungen zu übertragen, mit dem der Sender (E) oder der Empfänger (D) verbunden ist; und
- diese Daten in die von diesem Anbieter verschickte Berechnung zu integrieren.

9. Verfahren nach Anspruch 8,
**dadurch gekennzeichnet, dass**
der Dienstleistungsanbieter ein Zugangsanbieter zu Übermittlungseinrichtungen für die Post in elektronischer Form vom Sender (E) der Post oder zum Empfänger (D) der Post ist, insbesondere ein Internet-Zugangsanbieter oder Mobilfunkbetreiber.

10. Verfahren nach einem der Ansprüche 1 bis 9,
**dadurch gekennzeichnet, dass**
es darüber hinaus darin besteht, eine telefonische Adresse mit Aufnahme in einem Postaufzeichnungsdienst in Lautform vorzusehen, auf die ein Sender (E) von Post in elektronischer Form zugreifen kann, und der darüber hinaus ein Aufzeichnungszeitfenster für die Information aufweist, die den Empfänger in Lautform kennzeichnet, das dem zugeordneten Bereich entspricht, wobei die Übertragung in die reale Form seitens der Verwaltungseinheit (MU) durch Übertragung der Lautnachricht auf einen tragbaren realen Träger erfolgt, der dem Empfänger (D) übergeben wird.

11. Verfahren nach einem der Ansprüche 1 bis 10,
**dadurch gekennzeichnet, dass**
es vorsieht, es dem Empfänger (D) von Post in elektronischer Form zu ermöglichen, bezüglich des Versands dieser Post einen optionalen Dienst festzulegen, der besteht aus:
- Versand mit Empfangsbestätigung (AEC), und/oder
- Versand mit Expresszustellung der in ihre reale Form übertragenen Postsendung (EXP), und/oder
- Kostenfreier Versand mittels Einfügung von Werbenachricht(en) in die Postsendung (PUB).

12. Verfahren nach Anspruch 11,
**dadurch gekennzeichnet, dass**
es, wobei sich die elektronische Adresse einer Verwaltungseinheit (MU), die eine Postsendung in elektronischer Form entgegennimmt, in Form einer Internet-Domänenbezeichnung darstellt, vorsieht, die Auswahl des optionalen Dienstes durch Einfügen eines Kennzeichnungscodes des Dienstes (REC, EXP, PUB) in die elektronische Adresse zuzulassen.

13. Verfahren nach einem der Ansprüche 1 bis 12,
**dadurch gekennzeichnet, dass**
die Umsetzung einer Postsendung von ihrer elektronischen in ihre reale Form in einer Verwaltungseinheit aus einem Netz solcher Einheiten (MU) erfolgt, das dem Empfänger (D) nach vorher festgelegten Kriterien beispielsweise in Abhängigkeit von der Nähe zugeteilt wird, wobei diese Einheit folgende Schritte durchführt:
- Ausdrucken des Dokuments auf einem realen Träger im Falle einer elektronischen Postsendung, die Daten enthält, die zum Ausdrucken bestimmt sind (Text, Bilder); und/oder
- Aufzeichnen von elektronischen Daten auf einem Bild- oder Magnetträger im Falle von Laut-, Bild- oder anderen Daten, oder wenn die Benutzung eines Trägers beim Versenden der Post angefordert wird.

14. Verfahren nach einem der Ansprüche 1 bis 13,
**dadurch gekennzeichnet, dass**
es darüber hinaus den Versand von in realer Form verschickter Post, die Umsetzung dieser Post in eine elektronische Form und ihre Zustellung in dieser elektronischen Form vorsieht, wobei das Verfahren die folgenden Schritte umfasst:
- optische Analyse zur Digitalisierung im Hinblick auf den Einbau der digitalisierten Daten in die Post in elektronischer Form; und/oder
- Extrahieren der im Aufzeichnungsträger enthaltenen Daten im Hinblick auf deren Integration in die Post in elektronischer Form.

15. Verfahren nach einem der Ansprüche 1 bis 14,
**dadurch gekennzeichnet, dass**
es darüber hinaus vor dem Versand der Post an den Empfänger die Schritte umfasst:
- einen Bereitstellungs- und Übertragungspreis festzulegen,
- eine diesen Preis angebende elektronische Nachricht an den Sender (E) oder Empfänger (D) der Post in elektronischer Form zu schicken,
- als Antwort eine Zustimmungsnachricht des Senders oder Empfängers abzuwarten,
- den Versand der Post zum Empfänger (D) in Abhängigkeit von der Zustimmungsnachricht auszulösen.

16. Verfahren nach einem der Ansprüche 1 bis 15,
**dadurch gekennzeichnet, dass**
es darüber hinaus umfasst, einen Übergang der eine Postsendung in elektronischer Form bildenden Daten in verschlüsselter Form in zumindest einem Teil ihres Versands vorzusehen.

17. Verfahren nach einem der Ansprüche 1 bis 16,
**dadurch gekennzeichnet, dass**
es darüber hinaus den Schritt umfasst, eine elektronische Signatur mit der Post in elektronischer Form zu verknüpfen.

18. Verfahren nach Anspruch 17,
**dadurch gekennzeichnet, dass**
es eine Authentifizierung der elektronischen Signatur entsprechend einem festgelegten Protokoll vorsieht.

19. Verfahren nach Anspruch 18,
**dadurch gekennzeichnet, dass**
das Protokoll seitens einer Einheit (MU) verwaltet wird, die darüber hinaus den Versandvorgang verwaltet.

20. Verfahren nach einem der Ansprüche 1 bis 19,
**dadurch gekennzeichnet, dass**
es darüber hinaus den Schritt umfasst, die Postsendungen in elektronischer Form vor oder nach der Umsetzung, gegebenenfalls mit einer elektronischen Signatur zu archivieren.

21. Verfahren nach einem der Ansprüche 1 bis 20,
**dadurch gekennzeichnet, dass**
es darüber hinaus im Falle eines Postversands in elektronischer Form den Schritt umfasst, eine eventuelle elektronische Adresse des Empfängers (D') zu suchen und im Falle einer Identifizierung einer solchen Adresse die Post in elektronischer Form zu dieser Adresse zu versenden, ohne die Umsetzung durchzuführen.

22. System zum Befördern von in elektronischer Form ausgehend von einem Endgerät verschickter Post, um sie einem Empfänger (D) an seiner realen Adresse auf einem materiellen Träger zuzustellen,
**dadurch gekennzeichnet, dass**
es umfasst:
seitens des Endgeräts (2, 4, 6) des Senders (E):
- Darstellungseinrichtungen für einen der zu verschickenden Post zugeordneten Bereich und Verwaltungseinrichtungen für eine Information (56), die den in diesem Bereich enthaltenen Empfänger (D) kennzeichnet, wobei diese Information eine andere als die reale Adresse des Empfängers ist, und
- Einrichtungen zur Übertragung der Post in elektronischer Form an eine Verwaltungseinheit (MU), und
seitens der Verwaltungseinheit (MU):
- eine Datenbank (14), die für eine Gruppe von Empfängern eine Zuordnungsverknüpfung zwischen der Information, die den Empfänger kennzeichnet und der realen Adresse des Empfängers herstellt,
- Einrichtungen zur Entgegennahme der Post und zum Auslesen der den Empfänger kennzeichnenden Information, die in den Bereich eingetragen wurde,
- Einrichtungen, um durch Bezugnahme auf die Datenbank die reale Adresse des Empfängers zu bestimmen, die der ausgelesenen, den Empfänger kennzeichnenden Information entspricht,
- Einrichtungen, um den Inhalt der in elektronischer Form eingegangenen Post auf einen materiellen Träger zu übertragen, und
- Einrichtungen, die den Versand des materiellen Trägers an die bestimmte reale Adresse sicherstellen.

23. System nach Anspruch 22,
**dadurch gekennzeichnet, dass**
es dazu ausgelegt ist, das Verfahren nach einem der Ansprüche 1 bis 21 auszuführen.

24. Endgerät (2, 4, 6) des Systems nach Anspruch 22 oder 23,
**dadurch gekennzeichnet, dass** es umfasst:
- Darstellungseinrichtungen für einen der zu verschickenden Post zugeordneten Bereich, und Verwaltungseinrichtungen für eine Information (56), die den in diesem Bereich enthaltenen Empfänger (D) kennzeichnet, wobei diese Information eine andere als die reale Adresse des Empfängers ist, und
- Einrichtungen zur Übertragung der Post in elektronischer Form an eine Verwaltungseinheit (MU).

25. Verwaltungseinheit (MU) des Systems nach Anspruch 22 oder 23,
**dadurch gekennzeichnet, dass**
sie umfasst:
- eine Datenbank (14), die für eine Gruppe von Empfängern eine Zuordnungsverknüpfung zwischen der Information, die den Empfänger kennzeichnet und der realen Adresse des Empfängers herstellt,
- Einrichtungen zur Entgegennahme der Post und zum Auslesen der den Empfänger kennzeichnenden Information, die in den Bereich eingetragen wurde,
- Einrichtungen, um durch Bezugnahme auf die Datenbank die reale Adresse des Empfängers zu bestimmen, die der ausgelesenen, den Empfänger kennzeichnenden Information entspricht,
- Einrichtungen, um den Inhalt der in elektronischer Form eingegangenen Post auf einen materiellen Träger zu übertragen, und
- Einrichtungen, die den Versand des materiellen Trägers an die bestimmte reale Adresse sicherstellen.

26. Aufzeichnungsträger, der von einem Rechner verarbeitet werden kann, wobei der Träger ein elektronisches Datenverarbeitungsprogramm umfasst, das die Ausführung des Verfahrens nach einem der Ansprüche 1 bis 21 seitens des Endgeräts (2, 4, 6) und/oder seitens einer Verwaltungseinheit (MU) zulässt.
